# EUROPÄISCHE PATENTSCHRIFT

(11) **EP 2 994 216 B1**
(45) Veröffentlichungstag und Bekanntmachung des Hinweises auf die Patenterteilung: **02.08.2017**
(21) Anmeldenummer: 14733566.5
(22) Anmeldetag: 12.06.2014
(51) Int. Cl.: B01D 53/14, B01D 15/36, B01D 61/02

(54) **VERFAHREN ZUR ABSCHEIDUNG VON KOHLENDIOXID AUS EINEM GASSTROM, INSBESONDERE AUS EINEM RAUCHGASSTROM, SOWIE ABSCHEIDEVORRICHTUNG FÜR KOHLENDIOXID AUS EINEM GASSTROM, INSBESONDERE AUS EINEM RAUCHGASSTROM**
METHOD FOR SEPARATING CARBON DIOXIDE FROM A GAS FLOW, IN PARTICULAR FROM A FLUE GAS FLOW, AND SEPARATING DEVICE FOR SEPARATING CARBON DIOXIDE FROM A GAS FLOW, IN PARTICULAR FROM A FLUE GAS FLOW
PROCÉDÉ POUR SÉPARER DU DIOXYDE DE CARBONE D'UN COURANT DE GAZ, EN PARTICULIER D'UN COURANT DE GAZ DE COMBUSTION, AINSI QUE DISPOSITIF POUR SÉPARER DU DIOXYDE DE CARBONE D'UN COURANT DE GAZ, EN PARTICULIER D'UN COURANT DE GAZ DE COMBUSTION

(30) Priorität: 21.06.2013 DE 102013211757
(43) Veröffentlichungstag der Anmeldung: 16.03.2016
(73) Patentinhaber: Siemens Aktiengesellschaft, 80333 München (DE)
(72) Erfinder: HÄFNER, Benjamin, 63505 Langenselbold (DE); KURSAWE, Ansgar, 65527 Niedernhausen (DE); REICHL, Albert, 65812 Bad Soden (DE); SCHNEIDER, Rüdiger, 65817 Eppstein (DE); SCHRAMM, Henning, 60528 Frankfurt am Main (DE)
(86) Internationale Anmeldenummer: PCT/EP2014/062187
(87) Internationale Veröffentlichungsnummer: WO 2014/202448

(56) Entgegenhaltungen:
- EP-A1- 2 559 473
- WO-A1-2013/023918
- US-A- 5 292 407
- KOHL A L ET AL: "Gas purification, Fifth edition, Chapter 3 : Mechanical Design and Operation of Alkanolamine Plants", 1. Januar 1997 (1997-01-01), GAS PURIFICATION, GULF PUBLISHING COMPANY, HOUSTON, TEXAS, XP002550025, ISBN: 978-0-88415-220-0 Seite 243

## Beschreibung

Die Erfindung betrifft ein Verfahren zur Abscheidung von Kohlendioxid aus einem Gasstrom, insbesondere aus einem Rauchgasstrom. Weiterhin betrifft die Erfindung eine Abscheidevorrichtung für Kohlendioxid aus einem Gasstrom, insbesondere aus einem Rauchgasstrom.

Vor dem Hintergrund der klimatischen Veränderungen ist es ein globales Ziel, die Emission von Schadstoffen in die Atmosphäre zu verringern. Dies gilt insbesondere für die Emission von Kohlendioxid (CO₂), welches sich in der Atmosphäre ansammelt, die Wärmeabstrahlung der Erde behindert und so als Treibhauseffekt zu einer Erhöhung der Erdoberflächentemperatur führt.

Besonders bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid- Emissionen in die Atmosphäre muss das Kohlendioxid aus dem Rauchgas abgetrennt werden. Entsprechend werden insbesondere bei bestehenden fossilbefeuerten Kraftwerken geeignete Maßnahmen diskutiert, um nach der Verbrennung das entstandene Kohlendioxid aus dem Abgas abzutrennen (Post-Combustion-Capture).

Als eine technische Realisierung wird hierzu im Rauchgas enthaltenes Kohlendioxid nach der Verbrennung durch einen Absorptions-Desorptions-Prozess mittels eines Waschmediums bzw. eines Absorptionsmittels aus dem jeweiligen Gasstrom herausgewaschen. Hierzu werden häufig aminhaltige Waschmedien eingesetzt, die eine gute Selektivität und eine hohe Kapazität für Kohlendioxid zeigen.

Allerdings neigen diese aminbasierten Waschmedien durch Einwirkung von im Rauchgas als Nebenbestandteil enthaltenen Stickoxiden (NOₓ) zum Aufbau von Nitrosaminen. Im Fall nichtflüchtiger als Waschmedien eingesetzter Amine wie Aminosäuresalzlösungen sind die gegebenenfalls entstehenden Nitrosamine ebenfalls nicht flüchtig und somit nicht emissionsrelevant. Jedoch können geringe Mengen flüchtiger Amine als thermische und oxidative Abbauprodukte entstehen (insbesondere Methylamin) und somit trotzdem geringe Mengen emissionsrelevanter Komponenten auf niedrigem Niveau erzeugen

Die Amine und/oder die entsprechend als Folgeprodukt gebildeten Nitrosamine reichern sich solange im Waschmedium an, bis sich ein stabiles Gleichgewicht zwischen der Bildungsrate der Zerfallsprodukte bzw. der Zerfallsfolgeprodukte (insgesamt Degradationsprodukte) sowie deren Ausschleusung aus dem Prozess einstellt. Die Degradationsprodukte konzentrieren sich mit der Zeit im Abscheideprozess auf. Aufgrund der hohen in den Abscheideprozess eingetragenen Rauchgasmengen und der Aufkonzentrierung der Degradationsprodukte kann es hierbei zu einem Austrag dieser Komponenten in die Atmosphäre kommen. Diese Emissionen in die Umwelt gilt es zu verhindern.

Entsprechend wird mittlerweile auf Waschmedien zurückgegriffen, bei denen als Aktivkomponente ein Aminosäuresalz eingesetzt ist. Aminosäuresalze haben den Vorteil, dass sie keinen nennenswerten Dampfdruck haben, so dass ein Austrag aus dem Absorber vermieden werden kann. Allerdings kann auch bei dem Einsatz eines Waschmediums mit einem Aminosäuresalz als Aktivkomponente eine Degradation des Waschmediums nicht verhindert werden.

Zwar sind die Abbauprodukte von Waschmedien mit Aminosäuresalzen großteils wieder salzförmige Komponenten, die ebenfalls keinen nennenswerten Dampfdruck haben. Allerdings kann auch bei aminosäuresalzhaltigen Waschmedien ein geringer Teil der Degradations- bzw. Abbauprodukte aus Ammoniak und leicht flüchtigen Aminen bestehen, wie z.B. Methylamin. Methylamin dient als Vorläufer für die Bildung von Dimethylamin, welches wiederum durch Reaktion mit NOₓ das emissionsrelevante Dimethylnitrosamin bildet. Das Nitrosamin, sowie auch weitere enthaltene Amine reichern sich im Waschmedium an und werden über das von Kohlendioxid gereinigte Rauchgas über den Absorber mit in die Atmosphäre ausgetragen.
Um diese Amine und Nitrosamine kontrolliert zu entfernen, ist bislang der Einsatz eines sogenannten Reclaimers üblich, der lösliche Verunreinigungen wie Amine aus dem Waschmedium ausschleust. Allerdings ist eine dadurch erreichte Vermeidung unzulässiger Emissionen flüchtiger Komponenten nur durch einen unerwünschten Verlust an Waschmedium zu erreichen.
Um dies zu umgehen, kann beispielsweise eine Reinigungsvorrichtung für das aus dem Absorber ausgetragene Gas eingesetzt werden. Eine solche dem Absorber nachgeschaltete Reinigungsvorrichtung ist allerdings mit hohen Investitionskosten und baulichem Aufwand verbunden.
Als weitere Alternative kann zusätzlich zum Reclaimer eine Reinigungsvorrichtung eingesetzt werden, die dem Desorber nachgeschaltet ist. Hierzu ist aus der WO 2013/023918, auf der jeweils der Oberbegriff der unabhängigen Ansprüche beruht, ein Verfahren bekannt, bei welchem leicht flüchtige Degradationsprodukte aus einem Absorptionsmittelkreislauf eines CO₂- Abscheideprozesses abgetrennt werden. Hierzu wird ein Kondensat aus einem dem Desorber nachgeschalteten Kondensator einer Reinigungsvorrichtung zugeführt, in welcher die Reinigung des Kondensats von den enthaltenen Degradationsprodukten destillativ oder mittels eines Aktivkohlewäschers erfolgt. Ein solches Verfahren ist unter bestimmten Randbedingungen leider nicht wirtschaftlich durchführbar. Als Reinigungsvorrichtungen sind aus EP 2 559 473 A1 und US 5 292 407 A auch Mittel zur UV-Bestrahlung bzw. zum Ionenaustausch bekannt. Es ist demnach eine erste Aufgabe der Erfindung, ein Verfahren zur Abscheidung von Kohlendioxid aus einem Gasstrom anzugeben, welches unter Erhalt der Kapazität des eingesetzten Waschmediums eine kontrollierte und kostengünstig umsetzbare Entfernung von Degradationsprodukten aus einem Waschmedium ermöglicht und gleichzeitig eine mögliche Emission der Degradationsprodukte in die Atmosphäre verhindert oder möglichst deutlich verringert.
Eine zweite Aufgabe der Erfindung ist es, eine Abscheidevorrichtung für Kohlendioxid aus einem Gasstrom anzugeben, mit welcher ein entsprechendes Verfahren durchführbar ist.
Die erste Aufgabe der Erfindung wird erfindungsgemäß gelöst durch ein Verfahren zur Abscheidung von Kohlendioxid aus einem Gasstrom, insbesondere aus einem Rauchgasstrom, bei dem ein Gasstrom in einem Absorber einer Abscheidevorrichtung unter Abscheidung von im Gasstrom enthaltenem Kohlendioxid mit einem Waschmedium in Kontakt gebracht wird, das beladene Waschmedium zum Freisetzen des Kohlendioxids einem Desorber der Abscheidevorrichtung zugeführt wird, dem Desorber ein Dampfstrom entnommen und zur Bildung eines Kondensat einer Kühlvorrichtung zugeführt wird, und das in der Kühlvorrichtung gebildete Kondensat zumindest teilweise einer Reinigungsvorrichtung zugeführt wird, in der im Kondensat enthaltene Degradationsprodukte mittels einer Umkehrosmose entfernt werden.
Die Erfindung geht hierbei von der Tatsache aus, dass sich auch bei dem Einsatz eines Waschmediums mit vernachlässigbar geringem Dampfdruck der jeweiligen Aktivkomponente durch thermischen oder oxidativen Zerfall Degradationsprodukte bilden. Hierbei liegt ein Augenmerk insbesondere auf der Bildung von Ammoniak und leicht flüchtigen Aminen, die als Vorläufer für die Bildung umweltschädigender Nitrosamine dienen. Entsprechend müssen die Amine aus dem Waschmedium entfernt werden, um eine Bildung der Nitrosamine und deren Emissionen in die Atmosphäre zu verhindern.
Zwar kann durch gängige Reclaimer eine Verringerung eventuell auftretender Amin- bzw. Nitrosaminemission ermöglicht werden. Dies ist allerdings nur durch einen unerwünschten Verlust an Waschmedium zu erreichen.-
Zusätzlich zu einem solchen Reclaimer eingesetzte Reinigungsvorrichtungen sind nur bedingt geeignet, die Voraussetzungen für eine wirtschaftliche und leicht integrierbare Reinigung des in einem Abscheideprozess eingesetzten Waschmediums zu ermöglichen.
Unter Berücksichtigung der vorbeschriebene Problematik erkennt die Erfindung, dass Degradationsprodukte dann effektiv und wirtschaftlich aus dem Waschmedium entfernt werden können, wenn das aufzubereitende Kondensat einer Reinigungsvorrichtung zugeführt wird, in der die im Kondensat enthaltenen Degradationsprodukte mittels einer Umkehrosmose entfernt werden.
Bei diesem Verfahren wird dem Desorber ein Dampfstrom entnommen, der einer Kühlvorrichtung zugeführt wird. Der Dampfstrom enthält im Wesentlichen Kohlendioxid, Wasser und die im Waschmedium gebildeten flüchtigen Amine. Der Dampfstrom wird der Kühlvorrichtung zugeführt und dort kondensiert. Das Kondensat, welches im Wesentlichen aus Wasser, einem kleinen Anteil Kohlensäure (H₂CO₃), sowie einem kleinen Anteil Ammoniak und kondensierten Aminen, besonders Methylamin, besteht, wird schließlich der oder jeder Reinigungsvorrichtung zugeführt. Hierbei kann die Zufuhr des Kondensats zur Reinigungsvorrichtung entweder vollständig oder partiell erfolgen.
Durch den Einsatz einer Reinigungsvorrichtung, in der im Kondensat enthaltene Degradationsprodukte mittels Umkehrosmose entfernt werden, werden die Amin-Verunreinigungen gezielt aus dem Prozess ausgeschleust. Insbesondere das im Kondensat enthaltene Methylamin, also der Vorläufer für die Bildung des flüchtigen Dimethylnitrosamins, kann so entfernt werden.
Auch Verluste des Waschmediums, wie sie beim Betrieb des Reclaimers unvermeidbar sind, werden minimiert. Bei gleicher Degradationsrate kann so entweder der Durchsatz durch den Reclaimer reduziert oder, bei gleicher Leistung des Reclaimers, die Emissionen flüchtiger Degradationsprodukte weiter herabgesetzt werden.
Die Umkehrosmose ist hierbei entweder gemeinsam mit einem Ionentauscher oder als alleiniges Verfahren zur Reinigung des Kondensats einsetzbar. Bei einem gemeinsamen Einsatz einer Umkehrosmose mit einem Ionentauscher erfolgen beide Verfahrensschritte zweckmäßigerweise hintereinander. Die Reihenfolge ist hierbei dem Verfahren und der zur Durchführung des Verfahrens eingesetzten Anlage entsprechend wählbar.
Das verunreinigte Kondensat kann durch eine Umkehrosmose preiswert und einfach aufgereinigt werden. Eine Umkehrosmose ist ein Filtrationsverfahren, welches eine Ausfilterung von ionischen Verunreinigungen im Molekularbereich ermöglicht. Hierbei wird die verunreinigte Flüssigkeit, vorliegend das zu reinigende Kondensat, gegen ein Filtermedium gepresst. Die Verunreinigungen bleiben vor dem Filter zurück und das Kondensat dringt durch das Filtermedium hindurch. Als Filtermedium dient eine halbdurchlässige Membran. Bei der Umkehrosmose entstehen lediglich ein kleiner aufkonzentrierter Strom an Verunreinigungen und ein großer Strom an reinem Wasser. Das saubere Wasser kann hierbei beispielsweise in den Prozess zurückgeführt werden, wohingegen der verunreinigte Strom beispielsweise einer Biokläranlage zugeführt werden kann.
Auch der Einsatz eines Ionentauschers zusätzlich zur Umkehrosmose - ermöglicht eine einfache Reinigung des Kondensats. Bei einem Ionentauscher werden Materialien eingesetzt, mit denen gelöste Ionen durch andere Ionen gleichnamiger Ladung ersetzt werden können. Als Ionentauscher kann beispielsweise eine mit einem Ionenaustauschermaterial befüllte Säule oder eine Membran eingesetzt werden, die jeweils von der zu behandelnden Lösung, also vorliegend dem zu reinigenden Kondensat, durchströmt wird. Die auszutauschenden Ionen werden am Ionenaustauschermaterial gebunden, das seinerseits dafür eine äquivalente Stoffmenge von vorher gebundenen Ionen in die Lösung abgibt.
Das zu reinigende Kondensat ist hierbei insbesondere nur ein kleiner Teilstrom des gesamten Waschmediums, so dass die Reinigungsvorrichtung wesentlich kleiner ausgestaltet werden kann, als eine Reinigungsvorrichtung, deren Kapazität der Aufnahme von Waschmedium aus dem gesamten Abscheideprozess gerecht werden muss. Weiterhin ist die Aufreinigung des Kondensats besonders effektiv umsetzbar, da die Degradationsprodukte in dem Kondensat aufkonzentriert sind.

Insgesamt kann durch den Einsatz einer Umkehrosmose zur Entfernung flüchtiger Degradationsprodukte aus einem Waschmedium eine Abreicherung unerwünschter Amine - insbesondere Methylamin - als Vorläufer für die Bildung potenziell gefährlicher Nitrosamine - insbesondere Dimethylnitrosamin - im Waschmedium und damit eine Vermeidung unzulässiger Emissionen erreicht werden.
Zusätzlich kann durch den Einsatz einer entsprechenden Reinigungsvorrichtung auch in den Wasserhaushalt des Abscheideprozesses eingegriffen werden. Bisher wird der Wasserhaushalt des Abscheideprozesses durch eine Veränderung der Absorbertemperatur geregelt. Hierbei senken hohe Eingangstemperaturen und ein damit verbundener hoher Wasserdampfpartialdruck den Wassergehalt des Waschmediums. Der Wasserdampf wird mit dem gereinigten Gas aus dem Absorber ausgetragen.
Zur effektiven Absorption von Kohlendioxid im Waschmedium sind allerdings niedrige Temperaturen notwendig. Bei niederen Temperaturen wird jedoch auch im Rauchgas enthaltenes Wasser im Waschmedium kondensiert und gemeinsam mit diesem in den Desorber eingetragen. Das überschüssige Wasser wird mit dem Waschmedium erst durch die im Desorber vorherrschenden hohen Temperaturen als Wasserdampf gemeinsam mit den in Waschmedium enthaltenen Aminen und dem Kohlendioxid aus dem Desorber entfernt.
Das vorliegende Verfahren ermöglicht nun, den Absorber ohne Rücksicht auf den Wasserhaushalt bei möglichst geringen Absorbertemperaturen zu betreiben. Dies wird durch eine Wasserentnahme aus der Reinigungsvorrichtung - also der Umkehrosmose - erreicht, mittels derer eine Verringerung der Wassermenge im Abscheideprozess energetisch günstiger umgesetzt werden kann, als durch überhöhte Absorbertemperaturen.
Der Absorber kann durch die externe Regelung des Wasserhaushaltes bei niedrigen Temperaturen und somit so effizient wie technisch möglich gefahren werden. Das in der Reinigungsvorrichtung gereinigte Kondensat kann je nach Bedarf vollständig oder partiell wieder dem Desorber zugeführt werden. Überschüssiges Wasser kann über die Reinigungsvorrichtung aus dem Prozess ausgeschleust werden.
Insgesamt ist somit durch ein Verfahren, welches zur Reinigung eines mit Degradationsprodukten verunreinigten Kondensats das Prinzip der Umkehrosmose, neben der gezielten Entfernung der Degradationsprodukte aus dem Waschmedium auch ein Eingriff in die Wasserbilanz des Abscheideprozesses möglich. Durch eine entsprechende Fahrweise des Absorbers bei kälteren Temperaturen werden hierbei die Bedingungen für die Absorption von Kohlendioxid im Waschmedium verbessert. Hierdurch können Betriebskosten bei der Abscheidung von Kohlendioxid eingespart werden.
Auch ermöglicht der Einsatz einer entsprechenden Reinigungsvorrichtung grundsätzlich den Verzicht auf einen sogenannten Rauchgaskühler, der üblicherweise einem Absorber einer Abscheidevorrichtung vorgeschaltet ist. Mit anderen Worten wird das Rauchgas dem Absorber der Abscheidevorrichtung vorteilhafterweise im Wesentlichen ungekühlt zugeführt. In einem Rauchgaskühler wird das Rauchgas vor dem Eintritt in den Absorber abgekühlt, um so die für die Absorption von Kohlendioxid notwendigen Bedingungen zu schaffen. Zwar ist der Wassereintrag in den Abscheideprozess bei Verzicht auf einen Rauchgaskühler deutlich höher, dank der Regelung des Wasserhaushalts über die Reinigungsvorrichtung bzw. über die entsprechende Wasserrückführung aus der Reinigungsvorrichtung in den Abscheideprozess, kann der Mehreintrag ausgeglichen werden.
In einer vorteilhaften Ausgestaltung der Erfindung wird der Dampfstrom am Kopf des Desorbers entnommen. Da in der Gasphase des Desorbers aufgrund der dort vorherrschenden Temperaturen die Konzentration von Abbau- und Degradationsprodukten am größten ist, kann so eine im Wesentlichen vollständige Entfernung der Amine aus dem Desorber und damit abschließend aus dem Waschmedium erreicht werden. So werden die Vorläufer der Nitrosamine, insbesondere das Methylamin als Vorläufer des Dimethylnitrosamins, entfernt und damit deren Bildung verhindert.
Weiter bevorzugt wird das in der Reinigungsvorrichtung von Degradationsprodukten gereinigte Kondensat in den Desorber zurückgeführt. Das Kondensat, das im Wesentlichen gereinigtes Wasser ist, kann entweder vollständig oder nur partiell zurückgeführt werden, wobei die Menge des zurückgeführten Kondensats abhängig vom einzustellenden Wasserhaushalt im Abscheideprozess ist und je nach Wasserbedarf entsprechend angepasst werden kann.
Zweckmäßigerweise werden die in der Reinigungsvorrichtung abgetrennten Degradationsprodukte einer Verwertungseinrichtung zugeführt. Bei den abgetrennten Degradationsprodukten handelt es sich im Wesentlichen um die aus dem Kondensat abgetrennten flüchtigen Amine und hierbei insbesondere um das Methylamin. Die Amine können dank ihrer biologischen Abbaubarkeit beispielsweise problemlos einer Biokläranlage zugeführt und so im Wesentlichen vollständig aus dem Prozess entfernt werden.

In einer weiter vorteilhaften Ausgestaltung wird als Kühlvorrichtung ein Wärmetauscher eingesetzt. In dem Wärmetauscher wird der vom Desorber abgezogene Dampfstrom abgekühlt und kondensiert, so dass das Kondensat - vollständig oder partiell - der Reinigungsvorrichtung zugeführt werden kann. Das Kohlendioxid kann an dieser Stelle aus dem Kondensat abgetrennt werden und beispielsweise einer Aufbereitungseinrichtung zugeführt werden. Um die Reinigung eines Kondensats aus einem Wärmetauscher zu begünstigen, ist es zweckmäßig, das Kondensat vor der Einleitung in die Reinigungsvorrichtung leicht durch Zugabe einer entsprechenden Menge an Säure (bspw. H₂SO₄) anzusäuern, wobei ein pH-Wert ≤ 6 besonders vorteilhaft ist.

Besonders von Vorteil ist es, wenn als Kühlvorrichtung eine Waschkolonne eingesetzt wird. Eine Waschkolonne als Kühlvorrichtung stellt eine aminselektive Ergänzung zu dem bekannten Reclaimer dar. Sie ermöglicht eine besonders günstige Kühlung von feuchtem Gas, also vorliegend von feuchtem Kohlendioxid, was sich unmittelbar auf die Investitionskosten beim Betrieb einer entsprechenden Abscheidevorrichtung für Kohlendioxid auswirkt. Die Waschkolonne wird zweckmäßigerweise mit saurem Wasser betrieben, so dass in die Reinigungsvorrichtung eintretendes Kondensat bereits ausreichend angesäuert ist.

Zweckmäßigerweise wird vom Desorber abfließendes Waschmedium zum Absorber zurückgeführt. So kann das in dem Desorber von Kohlendioxid gereinigte Waschmedium dem Absorber zugeführt werden. Innerhalb des Absorbers steht das Waschmedium dann erneut zur Absorption von Kohlendioxid zur Verfügung.

Bevorzugt wird als Waschmedium ein Aminosäuresalz eingesetzt. Eine wässrige Aminosäuresalzlösung ist hierbei zweckmäßig. Der Einsatz insbesondere einer wässrigen Aminosäuresalzlösung eignet sich hierbei, da ein Aminosäuresalz einen vernachlässigbar geringen Dampfdruck hat und auch bei hohen Temperaturen nicht verdampft. Hierdurch werden insbesondere unerwünschte Emissionen in die Atmosphäre vermieden und zusätzlich eine Verringerung der Konzentration der Aktivkomponente des Waschmediums verhindert.
Bei der Verwendung eines Aminosäuresalzes als Waschmedium ist es vorteilhaft, wenn ein Aminosäuresalz eingesetzt wird, welches einen Kohlenstoff-Substituenten aus der Gruppe aufweist, die Wasserstoff, ein Alkyl, ein Hydroxyalkyl und ein Aminoalkyl enthält. Weiter bevorzugt wird ein Aminosäuresalz eingesetzt, dass einen Stickstoff-Substituenten aus der Gruppe aufweist, die Wasserstoff, ein Alkyl, ein Hydroxyalkyl und ein Halogenalkyl enthält. Wiederum kann ein einzelnes Aminosäuresalz wie beispielsweise ein Kaliumsalz des Glycins oder andere Aminosäuren eingesetzt sein. Auch können Mischungen verschiedener Aminosäuresalze als Absorptionsmittel eingesetzt werden. Weiter bevorzugt ist das Aminosäuresalz ein Salz eines Metalls, insbesondere eines Alkalimetalls.
Die zweite Aufgabe der Erfindung wird erfindungsgemäß gelöst durch eine Abscheidevorrichtung für Kohlendioxid aus einem Gasstrom, insbesondere aus einem Rauchgasstrom, umfassend einen Absorber zum Abscheiden von Kohlendioxid aus dem Gasstrom mittels eines Waschmediums, sowie einen strömungstechnisch mit dem Absorber gekoppelten Desorber zum Freisetzen von im Waschmedium absorbiertem Kohlendioxid, wobei dem Desorber eine Kühlvorrichtung zur Bildung von Kondensat strömungstechnisch angeschlossen ist, und wobei der Kühlvorrichtung eine Reinigungsvorrichtung strömungstechnisch angeschlossen ist, die zur Entfernung von Degradationsprodukten aus dem in der Kühlvorrichtung gebildeten Kondensat mittels einer Umkehrosmose eingerichtet und ausgebildet ist.
Eine solche Abscheidevorrichtung ermöglicht eine gezielte Entfernung von in einem Waschmedium gebildeten Degradationsprodukten und damit eine Verringerung der Bildung schädlicher Nitrosamine. Gleichzeitig wird ein Eingriff in die H₂O-Bilanz und eine entsprechende Fahrweise des Absorbers der Abscheidevorrichtung bei kälteren Temperaturen möglich, wodurch für die Absorption von Kohlendioxid im Waschmedium verbesserte Bedingungen geschaffen werden.

Das Kondensat wird hierbei zweckmäßigerweise aus einem dem Desorber entnehmbaren Dampfstrom gebildet. Da in der Gasphase am Kopf des Desorbers die Konzentration von Abbau- und Degradationsprodukten am größten ist, ist eine Abführleitung für den entnehmbaren Dampfstrom vorteilhafterweise am Kopf des Desorbers angeschlossen.

Zur Rückführung von gereinigtem Kondensat ist die Reinigungsvorrichtung zweckmäßigerweise über eine Rückführleitung strömungstechnisch mit einer Zuführleitung des Desorbers gekoppelt. So kann das von Degradationsprodukten gereinigte Kondensat je nach Wasserbedarf entweder partiell oder vollständig in den Desorber und damit den Abscheideprozess zurückgeführt werden.

Vorzugsweise ist der Reinigungsvorrichtung eine Abführleitung angeschlossen, die in einer Verwertungseinrichtung mündet. In der Verwertungseinrichtung, die insbesondere eine Biokläranlage ist, können die Degradationsprodukte biologisch abgebaut werden.

In einer vorteilhaften Ausgestaltung ist als Kühlvorrichtung ein Wärmetauscher eingesetzt, mittels welchem ein dem Desorber entnommener Dampfstrom kondensiert werden kann.

Eine besonders günstige und effektive Möglichkeit zur Kondensation eines Dampfstromes bietet sich dann, wenn als Kühlvorrichtung eine Waschkolonne eingesetzt ist.

Vorzugsweise ist der Desorber über eine Rückführleitung strömungstechnisch mit einer Zuführleitung des Absorbers gekoppelt, so dass das in dem Desorber von Kohlendioxid gereinigte Waschmedium dem Absorber zugeführt und innerhalb des Absorbers erneut zur Absorption von Kohlendioxid genutzt werden kann.

Zweckmäßigerweise ist der Kühlvorrichtung eine Abführleitung angeschlossen, die in einer Aufbereitungsvorrichtung mündet.
In der Aufbereitungsvorrichtung kann ein CO₂-reicher Gasstrom verdichtet werden, um beispielsweise den Transport zu einer Speicherstätte zu ermöglichen.
Da ein Aminosäuresalz einen vernachlässigbar geringen Dampfdruck hat und auch bei hohen Temperaturen nicht verdampft, ist als Waschmedium zweckmäßigerweise ein solches Aminosäuresalz, insbesondere in Form einer wässrigen Aminosäuresalzlösung eingesetzt.
Weitere vorteilhafte Ausgestaltungen für die Abscheidevorrichtung für Kohlendioxid ergeben sich aus den auf das Verfahren zur Abscheidung von Kohlendioxid aus einem Gasstrom gerichteten Unteransprüchen. Die für das Verfahren genannten Vorteile können hierbei sinngemäß auf die Abscheidevorrichtung übertragen werden.

Im Folgenden wird die Erfindung anhand einer Zeichnung näher erläutert. Dabei zeigen:
FIG 1 eine schematische Darstellung einer erfindungsgemäßen Abscheidevorrichtung für Kohlendioxid mit einer Kühlvorrichtung und einer Reinigungsvorrichtung, sowie
FIG 2 einen Ausschnitt aus einer nicht erfindungsgemäßen Abscheidevorrichtung für Kohlendioxid mit einer Kühlvorrichtung und einer Reinigungsvorrichtung.

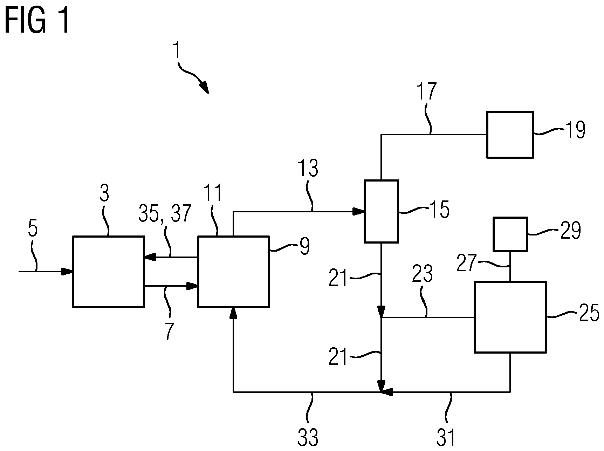

FIG 1 zeigt eine schematische Darstellung einer Abscheidevorrichtung 1 für Kohlendioxid aus einem Rauchgasstrom. Die Abscheidevorrichtung 1 umfasst einen Absorber 3 zum Abscheiden von Kohlendioxid aus dem Rauchgasstrom. Hierzu wird dem Absorber 3 Rauchgas über eine Zuführleitung 5 zugeführt und das im Rauchgas enthaltene Kohlendioxid im Absorber 3 mit einem Waschmedium in Kontakt gebracht. Das im Rauchgas enthaltene Kohlendioxid wird im Waschmedium absorbiert und über eine Zuführleitung 7 einem strömungstechnisch mit dem Absorber 3 verbundenen Desorber 9 zugeführt. In dem Desorber 9 wird das in dem Waschmedium absorbierte Kohlendioxid durch Temperaturerhöhung freigesetzt.

Das vorliegend als Waschmedium eingesetzte Aminosäuresalz hat zwar einen äußerst geringen Dampfdruck. Dennoch kann ein kleiner Teil der Degradations- bzw. Abbauprodukte aus leicht flüchtigem Methylamin bestehen, welches als Vorläufer für die Bildung von z.B. Dimethylamin dienen kann. Das Dimethylamin wiederum kann durch Reaktion mit NOₓ aus dem Rauchgas, welches dem Absorber 3 über die Zuführleitung 5 zugeführt wird, das emissionsrelevante Dimethylnitrosamin bilden.

Um eine Emission dieser unerwünschten Nitrosamine zu verhindern und gleichzeitig das Waschmedium entsprechend aufzureinigen, wird am Kopf 11 des Desorbers 9 über eine Abführleitung 13 ein Dampfstrom abgezogen. Der Dampfstrom enthält im Wesentlichen Wasser, Kohlendioxid und die entsprechenden Amine und wird einer als Waschkolonne ausgebildeten Kühlvorrichtung 15 zugeführt.

Hierbei ist selbstverständlich auch der Einsatz einer als klassischer Wärmetauscher ausgebildeten Kühlvorrichtung 15 möglich.

In der Kühlvorrichtung 15 wird der Dampfstrom kondensiert und das gasförmige Kohlendioxid über eine Abführleitung 17 einer Aufbereitungsvorrichtung 19 zugeführt. Die Waschkolonne 15 wird mit angesäuertem Wasser betrieben und stellt ein Kondensat mit einem pH-Wert von ca. 6 bereit.

Das Kondensat, welches im Wesentlichen aus Wasser und aus einem kleinen Teil an Methylaminen, sowie aus einem kleinen Teil an Kohlensäure besteht, wird der Waschkolonne 15 über eine als Kondensatleitung ausgebildete Abführleitung 21 entnommen und über eine Abzweigleitung 23 einer Reinigungsvorrichtung 25 zugeführt. Die Zufuhr des Kondensats zur Reinigungsvorrichtung 25 erfolgt hierbei vollständig.

Die Reinigungsvorrichtung 25 ist vorliegend als eine Umkehrosmoseanlage ausgebildet. Mittels der Umkehrosmose werden flüchtige Amine aus dem Kondensat entfernt, wobei ein geringer Produktstrom an abgetrennten Degradationsprodukten entsteht. Die Degradationsprodukte, im Wesentlichen Methylamin und Ammoniak, werden über eine Abführleitung 27 einer als Biokläranlage ausgestalteten Verwertungseinrichtung 29 zugeführt und dort entsprechend abgebaut.

Der gereinigte Kondensatstrom, der nun im Wesentlichen nur noch gereinigtes Wasser enthält, wird über eine Rückführleitung 31 partiell dem Desorber 9 zugeführt. Hierzu ist die Rückführleitung 31 der Reinigungsvorrichtung 25 strömungstechnisch mit einer Zuführleitung 33 des Desorbers 9 gekoppelt. Die Menge des zurückgeführten Wassers ist hierbei grundsätzlich anhängig vom Wasserhaushalt des Abscheideprozesses und kann diesem entsprechend angepasst werden.

Weiterhin ist der Desorber 9 über eine Rückführleitung 35 strömungstechnisch mit einer Zuführleitung 37 des Absorbers 3 gekoppelt. So kann das von Kohlendioxid gereinigte Waschmedium dem Absorber 3 zugeführt und dort erneut zur Absorption von Kohlendioxid genutzt werden.

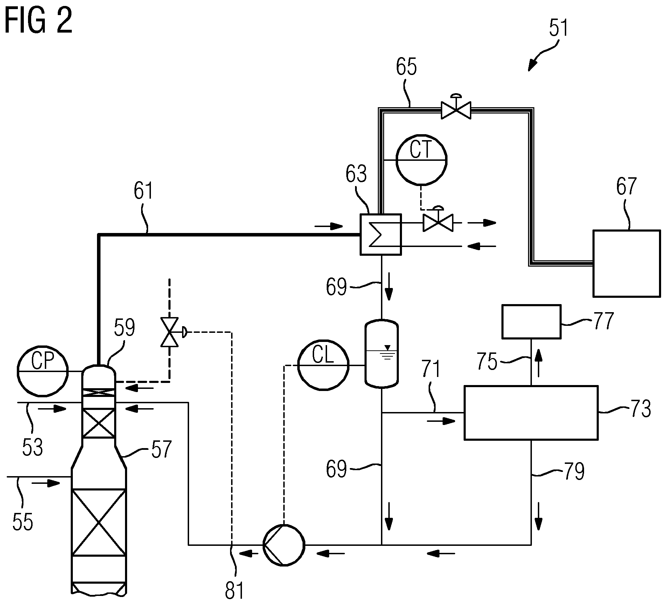

FIG 2 zeigt einen Ausschnitt einer weiteren Abscheidevorrichtung 51 für Kohlendioxid aus einem Rauchgasstrom. Die Abscheidevorrichtung 51 umfasst ebenfalls einen Absorber zum Abscheiden von Kohlendioxid aus dem Rauchgasstrom mittels einer wässrigen Aminosäuresalzlösung. Der Absorber ist aufgrund des gezeigten Ausschnitts vorliegend nicht zu sehen.

Das aus dem Absorber austretende, mit Kohlendioxid befrachtete Waschmedium wird vorliegend über zwei Zuführleitungen 53, 55 einem strömungstechnisch mit dem Absorber verbundenen Desorber 57 zugeführt. In dem Desorber 57 wird das in dem Waschmedium absorbierte Kohlendioxid durch Temperaturerhöhung freigesetzt.

Auch bei der Abscheidevorrichtung 51 wird zur Verhinderung der Bildung von Nitrosaminen am Kopf 59 des Desorbers 57 über eine Abführleitung 61 ein Dampfstrom abgezogen, der Wasser, Kohlendioxid und die entsprechend im Waschmedium gebildeten Amine enthält. Der Dampfstrom wird einer als Wärmetauscher ausgebildeten Kühlvorrichtung 63 zugeführt. In der Kühlvorrichtung 63 wird der Dampfstrom kondensiert und das gasförmige Kohlendioxid über eine Abführleitung 65 einer Aufbereitungsvorrichtung 67 zugeführt.

Das Kondensat, welches auch vorliegend im Wesentlichen aus Wasser und aus einem kleinen Teil an Methylaminen sowie aus einem kleinen Teil an Kohlensäure besteht, wird dem Wärmetauscher 63 über eine als Kondensatleitung ausgebildete Abführleitung 69 entnommen und über eine Abzweigleitung 71 einer als Ionentauscher ausgebildeten Reinigungsvorrichtung 73 zugeführt. Die Zufuhr erfolgt vorliegend nur partiell, es wird also nur ein kleiner Teil des von dem Wärmetauscher 63 abströmenden Kondensats der Reinigungsvorrichtung 73 zugeführt.

In der Reinigungsvorrichtung 73 wird das Kondensat von Degradationsprodukten gereinigt. Der entstehende Produktstrom abgetrennter Degradationsprodukte wird über eine Abführleitung 75 einer Verwertungseinrichtung 77, vorliegend einer Biokläranlage, zugeführt und dort entsprechend abgebaut.

Der gereinigte Kondensatstrom wird über eine Rückführleitung 79 vollständig dem Desorber 77 zugeführt. Hierzu ist die Rückführleitung 79 der Reinigungsvorrichtung 73 strömungstechnisch mit einer Zuführleitung 81 des Desorbers 57 gekoppelt.

Weiterhin ist der Desorber 57 auch vorliegend über eine Rückführleitung strömungstechnisch mit einer Zuführleitung des Absorbers gekoppelt, was jedoch aufgrund der Darstellung nicht gezeigt ist.

## Patentansprüche

1. Verfahren zur Abscheidung von Kohlendioxid aus einem Gasstrom, insbesondere aus einem Rauchgasstrom, bei dem
- ein Gasstrom in einem Absorber (3) einer Abscheidevorrichtung (1, 51) unter Abscheidung von im Gasstrom enthaltenem Kohlendioxid mit einem Waschmedium in Kontakt gebracht wird,
- das beladene Waschmedium zum Freisetzen des Kohlendioxids einem Desorber (9, 57) der Abscheidevorrichtung (1, 51) zugeführt wird,
- dem Desorber (9, 57) ein Dampfstrom entnommen und zur Bildung von Kondensat einer Kühlvorrichtung (15, 63) zugeführt wird, und
- das in der Kühlvorrichtung (15, 63) gebildete Kondensat zumindest teilweise einer Reinigungsvorrichtung (25, 73) zugeführt wird,
**dadurch gekennzeichnet, dass** im Kondensat enthaltene Degradationsprodukte mittels einer Umkehrosmose entfernt werden.

2. Verfahren nach Anspruch 1, bei dem im Kondensat enthaltene Degradationsprodukte zusätzlich mittels eines Ionentauschers entfernt werden.

3. Verfahren nach Anspruch 1 oder 2, bei dem der Dampfstrom am Kopf (11, 59) des Desorbers (9, 57) entnommen wird.

4. Verfahren nach einem der vorhergehenden Ansprüche, bei dem das in der Reinigungsvorrichtung (25, 73) von Degradationsprodukten gereinigte Kondensat in den Desorber (9, 57) zurückgeführt wird.

5. Verfahren nach einem der vorhergehenden Ansprüche, bei dem die in der Reinigungsvorrichtung (25, 73) abgetrennten Degradationsprodukte einer Verwertungseinrichtung (29, 77) zugeführt werden.

6. Verfahren nach einem der vorhergehenden Ansprüche, bei dem als Kühlvorrichtung (15, 63) ein Wärmetauscher eingesetzt wird.

7. Verfahren nach einem der Ansprüche 1 bis 5, bei dem als Kühlvorrichtung (15, 63) eine Waschkolonne eingesetzt wird.

8. Verfahren nach einem der vorhergehenden Ansprüche, bei dem vom Desorber (9, 57) abfließendes Waschmedium zum Absorber (3) zurückgeführt wird.

9. Verfahren nach einem der vorhergehenden Ansprüche, bei dem der Kühleinrichtung (15, 63) abgetrenntes Kohlendioxid einer Aufbereitungsvorrichtung (19, 67) zugeführt wird.

10. Verfahren nach einem der vorhergehenden Ansprüche, bei dem als Waschmedium ein Aminosäuresalz oder dessen wässrige Lösung eingesetzt wird.

11. Abscheidevorrichtung (1, 51) für Kohlendioxid aus einem Gasstrom, insbesondere aus einem Rauchgasstrom, umfassend einen Absorber (3) zum Abscheiden von Kohlendioxid aus dem Gasstrom mittels eines Waschmediums, sowie einen strömungstechnisch mit dem Absorber (3) gekoppelten Desorber (9, 57) zum Freisetzen von im Waschmedium absorbiertem Kohlendioxid, wobei dem Desorber (9, 57) eine Kühlvorrichtung (15, 63) zur Bildung eines Kondensats strömungstechnisch angeschlossen ist, und wobei der Kühlvorrichtung (15, 63) eine Reinigungsvorrichtung (25, 73) strömungstechnisch angeschlossen ist, **dadurch gekennzeichnet, dass** die Reinigungsvorrichtung (25, 73) zur Entfernung von Degradationsprodukten aus dem in der Kühlvorrichtung (15, 63) gebildeten Kondensat mittels einer Umkehrosmose eingerichtet und ausgebildet ist.

12. Abscheidevorrichtung (1, 51) nach Anspruch 11, wobei die Reinigungsvorrichtung (25, 73) zusätzlich zur Entfernung von Degradationsprodukten aus dem in der Kühlvorrichtung (15, 63) gebildeten Kondensat mittels eines Ionentauschers eingerichtet und ausgebildet ist.

13. Abscheidevorrichtung (1, 51) nach Anspruch 11 oder 12, wobei am Kopf (11, 59) des Desorbers (9, 57) eine Abführleitung (13, 61) für den entnehmbaren Dampfstrom angeschlossen ist.

14. Abscheidevorrichtung (1, 51) nach einem der Ansprüche 11 bis 13, wobei die Reinigungsvorrichtung (25, 73) zur Rückführung von gereinigtem Kondensat über eine Rückführleitung (31, 79) strömungstechnisch mit einer Zuführleitung (33, 81) des Desorbers (9, 57) gekoppelt ist.

15. Abscheidevorrichtung (1, 51) nach einem der Ansprüche 11 bis 14, wobei der Reinigungsvorrichtung (25, 73) eine Abführleitung (27, 75) angeschlossen ist, die in einer Verwertungseinrichtung (29, 77) mündet.

16. Abscheidevorrichtung (1, 51) nach einem der Ansprüche 11 bis 15, wobei als Kühlvorrichtung (15, 63) ein Wärmetauscher eingesetzt ist.

17. Abscheidevorrichtung (1, 51) nach einem der Ansprüche 11 bis 15, wobei als Kühlvorrichtung (15, 63) eine Waschkolonne eingesetzt ist.

18. Abscheidevorrichtung (1, 51) nach einem der Ansprüche 11 bis 17, wobei der Desorber (9, 57) über eine Rückführleitung (35) strömungstechnisch mit einer Zuführleitung (37) des Absorbers (3) gekoppelt ist.

19. Abscheidevorrichtung (1, 51) nach einem der Ansprüche 11 bis 18, wobei der Kühlvorrichtung (15, 63) eine Abführleitung (17, 65) angeschlossen ist, die in einer Aufbereitungsvorrichtung (19, 67) mündet.

20. Abscheidevorrichtung (1, 51) nach einem der Ansprüche 11 bis 19, wobei als Waschmedium ein Aminosäuresalz eingesetzt ist.

## Claims

1. Method for separating off carbon dioxide from a gas stream, in particular from a flue gas stream, in which
- a gas stream is brought into contact with a scrubbing medium in an absorber (3) of a separating device (1, 51), with carbon dioxide present in the gas stream being separated off,
- the loaded scrubbing medium is fed to a desorber (9, 57) of the separating device (1, 51) to liberate the carbon dioxide,
- a vapor stream is withdrawn from the desorber (9, 57) and fed to a cooling device (15, 63) for formation of condensate, and
- the condensate formed in the cooling device (15, 63) is at least in part fed to a purification device (25, 73), **characterized in that** degradation products present in the condensate are removed by means of reverse osmosis.

2. Method according to Claim 1, in which degradation products present in the condensate are additionally removed by means of an ion exchanger.

3. Method according to Claim 1 or 2, in which the vapor stream is withdrawn at the top (11, 59) of the desorber (9, 57).

4. Method according to any one of the preceeding claims, in which the condensate that was purified in the purification device (25, 73) by removal of degradation products is recirculated to the desorber (9, 57).

5. Method according to any one of the preceding claims, in which the degradation products separated off in the purification device (25, 73) are fed to a utilization appliance (29, 77).

6. Method according to any one of the preceding claims, in which the cooling device (15, 63) used is a heat exchanger.

7. Method according to any one of Claims 1 to 5, in which the cooling device (15, 63) used is a scrubbing column.

8. Method according to any one of the preceding claims, in which scrubbing medium draining off from the desorber (9, 57) is recirculated to the absorber (3).

9. Method according to any one of the preceding claims, in which carbon dioxide separated off from the cooling device (15, 63) is fed to a treatment device (19, 67).

10. Method according to any one of the preceding claims, in which the scrubbing medium used is an amino acid salt or the aqueous solution thereof.

11. Separating device (1, 51) for separating off carbon dioxide from a gas stream, in particular from a flue gas stream, comprising an absorber (3) for separating off carbon dioxide from the gas stream by means of a scrubbing medium, and also a desorber (9, 57) that is flow-coupled to the absorber (3) and is for liberating carbon dioxide that is absorbed in the scrubbing medium, wherein a cooling device (15, 63) is flow-connected to the desorber (9, 57) to form a condensate, and wherein a purification device (25, 73) is flow-connected to the cooling device (15, 63), **characterized in that** the purification device (25, 73) is equipped and constructed to remove degradation products from the condensate formed in the cooling device (15, 63) by means of reverse osmosis.

12. Separating device (1, 51) according to Claim 11, wherein the purification device (25, 73) is additionally equipped and constructed to remove degradation products from the condensate formed in the cooling device (15, 63) by means of an ion exchanger.

13. Separating device (1, 51) according to Claim 11 or 12, wherein a discharge line (13, 61) for the withdrawable vapor stream is connected at the top (11, 59) of the desorber (9, 57).

14. Separating device (1, 51) according to any one of Claims 11 to 13, wherein the purification device (25, 73) for recirculating purified condensate is flow-coupled via a recirculation line (31, 79) to a feed line (33, 81) of the desorber (9, 57).

15. Separating device (1, 51) according to any one of Claims 11 to 14, wherein a discharge line (27, 75) is connected to the purification device (25, 73), which discharge line opens out into a utilization appliance (29, 77).

16. Separating device (1, 51) according to any one of Claims 11 to 15, wherein the cooling device (15, 63) used is a heat exchanger.

17. Separating device (1, 51) according to any one of Claims 11 to 15, wherein the cooling device (15, 63) used is a scrubbing column.

18. Separating device (1, 51) according to any one of Claims 11 to 17, wherein the desorber (9, 57) is flow-coupled via a recirculation line (35) to a feed line (37) of the absorber (3).

19. Separating device (1, 51) according to any one of Claims 11 to 18, wherein the cooling device (15, 63) is connected to a discharge line (17, 65) that opens out into a treatment device (19, 67).

20. Separating device (1, 51) according to any one of Claims 11 to 19, wherein the scrubbing medium used is an amino acid salt.

## Revendications

1. Procédé de séparation du dioxyde de carbone d' un courant gazeux, notamment d' un courant de gaz de fumée, dans lequel
- on met un courant gazeux dans un absorbeur (3) d' un dispositif (1, 51) de séparation en contact avec un milieu de lavage en séparant du dioxyde de carbone contenu dans le courant gazeux,
- on envoie le milieu de lavage chargé pour libérer le dioxyde de carbone à un désorbeur (9, 57) du dispositif (1, 51) de séparation,
- on prélève du désorbeur (9, 57) un courant de vapeur et, pour former du produit condensé, on l' envoie à un dispositif (15, 63) de refroidissement et
- on envoie le produit condensé formé dans le dispositif (15, 63) de refroidissement, au moins en partie, à un dispositif (25, 73) d' épuration,
**caractérisé en ce que** l' on élimine, au moyen d' une osmose inverse, des produits de dégradation contenus dans le produit condensé.

2. Procédé suivant la revendication 1, dans lequel on élimine supplémentairement, au moyen d' un échangeur d' ions, des produits de dégradation contenus dans le produit condensé.

3. Procédé suivant la revendication 1 ou 2, dans lequel on prélève le courant de vapeur en tête (11, 59) du désorbeur (9, 57).

4. Procédé suivant l' une des revendications précédentes, dans lequel on recycle, dans le désorbeur (9, 57), le produit condensé épuré de produits de dégradation dans le dispositif (25, 73) d' épuration.

5. Procédé suivant l'une des revendications précédentes, dans lequel on envoie, à un dispositif (29, 77) de valorisation, les produits de dégradation séparés dans le dispositif (25, 73) d' épuration.

6. Procédé suivant l'une des revendications précédentes, dans lequel on utilise un échangeur de chaleur comme dispositif (15, 63) de refroidissement.

7. Procédé suivant l'une des revendications 1 à 5, dans lequel on utilise une colonne de lavage comme dispositif (15, 63) de refroidissement.

8. Procédé suivant l'une des revendications précédentes, dans lequel on recycle à l' absorbeur (3) du milieu de lavage sortant du désorbeur (9, 57).

9. Procédé suivant l'une des revendications précédentes, dans lequel on envoie à un dispositif (19, 67) de traitement le dioxyde de carbone séparé dans le dispositif (15, 63) de refroidissement.

10. Procédé suivant l'une des revendications précédentes, dans lequel on utilise comme milieu de lavage un sel d' acide aminé ou sa solution aqueuse.

11. Installation (1, 51) de séparation du dioxyde de carbone d' un courant gazeux, notamment d' un courant de gaz de fumée, comprenant un absorbeur (3) pour séparer du dioxyde de carbone du courant gazeux au moyen d' un milieu de lavage, ainsi qu' un désorbeur (9, 57) couplé en technique d' écoulement à l' absorbeur (3) pour libérer du dioxyde de carbone absorbé dans le milieu de lavage, un dispositif (15, 63) de refroidissement étant, pour former un produit condensé, raccordé en technique d' écoulement au désorbeur (9, 57) et au dispositif (15, 63) de refroidissement est raccordé en technique d' écoulement un dispositif (25, 73) d' épuration, **caractérisée en ce que** le dispositif (25, 73) d' épuration est conçu et constitué pour, au moyen d' une osmose inverse, éliminer des produits de dégradation du produit condensé formé dans le dispositif (15, 63) de refroidissement.

12. Installation (1, 51) de séparation suivant la revendication 11, dans laquelle le dispositif (25, 73) d' épuration est conçu et constitué pour, au moyen d' un échangeur d' ions, éliminer supplémentairement des produits de dégradation du produit condensé formé dans le dispositif (15, 63) de refroidissement.

13. Installation (1, 51) de séparation suivant la revendication 11 ou 12, dans laquelle un conduit (13, 61) d' évacuation du courant de vapeur pouvant être prélevé est raccordé en tête (11, 59) du désorbeur (9, 57).

14. Installation (1, 51) de séparation suivant l'une des revendications 11 à 13, dans laquelle le dispositif (25, 73) d' épuration est, pour le recyclage du produit condensé épuré, couplé par un conduit (31, 79) de recyclage en technique d' écoulement à un conduit (33, 81) d' apport au désorbeur (9, 57).

15. Installation (1, 51) de séparation suivant l'une des revendications 11 à 14, dans laquelle, au dispositif (25, 73) d' épuration, est raccordé un conduit (27, 75) d' épuration, qui débouche dans un dispositif (29, 77) de valorisation.

16. Installation (1, 51) de séparation suivant l'une des revendications 11 à 15, dans laquelle un échangeur de chaleur est utilisé comme dispositif (15, 63) de refroidissement.

17. Installation (1, 51) de séparation suivant l'une des revendications 11 à 15, dans laquelle une colonne de lavage est utilisée comme dispositif (15, 63) de refroidissement.

18. Installation (1, 51) de séparation suivant l'une des revendications 11 à 17, dans laquelle le désorbeur (9, 57) est couplé en technique d' écoulement à un conduit (37) d' apport à l' absorbeur (3) par l'intermédiaire d' un conduit (35) de recyclage.

19. Installation (1, 51) de séparation suivant l'une des revendications 11 à 18, dans laquelle, au dispositif (15, 63) de refroidissement est raccordé un conduit (17, 65) d' évacuation, qui débouche dans un dispositif (19, 67) de traitement.

20. Installation (1, 51) de séparation suivant l'une des revendications 11 à 19, dans laquelle un sel d' acide aminé est utilisé comme milieu de lavage.
